# EUROPEAN PATENT APPLICATION

(11) **EP 2 421 076 A1**
(43) Date of publication of application: **22.02.2012**
(21) Application number: 10793810.2
(22) Date of filing: 24.06.2010
(51) Int. Cl.: H01M 4/13, C22C 21/00, H01M 4/139, H01M 4/66

(54) **NON-AQUEOUS ELECTROLYTE SECONDARY BATTERY AND PROCESS FOR PRODUCTION THEREOF**

(30) Priority: 30.06.2009 JP 2009156062
(71) Applicant: Panasonic Corporation, Kadoma-shi Osaka 571-8501 (JP)
(72) Inventor: MURAOKA, Yoshiyuki, 1-61, Shiromi 2-chome, Chuo-ku, Osaka-shi, Osaka 540-6207 (JP); UGAJI, Masaya, 1-61, Shiromi 2-chome, Chuo-ku, Osaka-shi, Osaka 540-6207 (JP)
(74) Representative: Grünecker, Kinkeldey, Stockmair & Schwanhäusser
(86) International application number: PCT/JP2010/004190
(87) International publication number: WO 2011/001636

(57) **Abstract**

A nonaqueous electrolyte secondary battery includes a positive electrode (4), a negative electrode (5), a porous insulating layer (6), and a nonaqueous electrolyte. In the positive electrode (4), a positive electrode mixture layer (4B) is provided on at least one surface of a positive electrode current collector (4A). A tensile extension percentage of the positive electrode (4) is 3.0% or more. The positive electrode current collector (4A) contains iron. A porosity of the positive electrode mixture layer (4B) is 17% or less.

## Description

### TECHNICAL FIELD

The present invention relates to nonaqueous electrolyte secondary batteries and methods for fabricating the nonaqueous electrolyte secondary batteries.

### BACKGROUND ART

To meet recent demands for use as a power supply on vehicles in consideration of environmental issues, or for employing DC power supplies for large tools, small and lightweight secondary batteries capable of performing rapid charge and large-current discharge have been required. Examples of typical batteries satisfying such demands include a nonaqueous electrolyte secondary battery.

Such a nonaqueous electrolyte secondary battery (which may be hereinafter simply referred to as a "battery") includes an electrode group in which a porous insulating layer is provided between a positive electrode and a negative electrode. This electrode group is placed in a battery case made of metal such as stainless steel, iron plated with nickel, or aluminum, together with an electrolyte. The battery case is sealed with a lid (Patent Document 1).

Recently, there has been a demand for an increase in capacity of the nonaqueous electrolyte secondary battery. One example of the method for increasing the capacity of the nonaqueous electrolyte secondary battery may be a method in which a filling density of an active material in a mixture layer is increased. For example, it is suggested in Patent Document 2 to roll a layered structure in which a mixture layer is applied to both surfaces of a current collector, using a roll heated to about 80-140°C.

### CITATION LIST

### PATENT DOCUMENT

Patent Document 1: Japanese Patent Publication No. H05-182692
Patent Document 2: Japanese Patent Publication No. H05-129020

### SUMMARY OF THE INVENTION

### TECHNICAL PROBLEM

However, it turned out that in some cases it was difficult to ensure safety of the nonaqueous electrolyte secondary battery if the filling density of the active material in the mixture layer was increased.

The present invention was made in view of the above problem, and it is an objective of the invention to increase a capacity of a nonaqueous electrolyte secondary battery, while ensuring safety of the nonaqueous electrolyte secondary battery.

### SOLUTION TO THE PROBLEM

A nonaqueous electrolyte secondary battery according to the present invention includes a positive electrode, a negative electrode, a porous insulating layer interposed between the positive electrode and the negative electrode, and a nonaqueous electrolyte. The positive electrode includes a positive electrode current collector and a positive electrode mixture layer provided on at least one surface of the positive electrode current collector. A tensile extension percentage of the positive electrode is 3.0% or more. The positive electrode current collector contains iron. A porosity of the positive electrode mixture layer is l7% or less.

A method for fabricating such a nonaqueous electrolyte secondary battery includes the following steps. First, a positive electrode current collector containing iron is prepared. Next, a positive electrode mixture slurry containing a positive electrode active material and a binder is provided on a surface of the positive electrode current collector, and the positive electrode mixture slurry is dried. After that, the positive electrode current collector on the surface of which the positive electrode active material and the binder are provided is rolled at a predetermined temperature. Then, the rolled positive electrode current collector is subjected to a heat treatment. A predetermined temperature of the rolling is equal to or higher than a first temperature and lower than a second temperature. The first temperature is a temperature at which an elastic coefficient of the binder starts to decrease. The second temperature is a temperature at which the tensile extension percentage of the positive electrode current collector reaches a minimum.

According to the method for fabricating the nonaqueous electrolyte secondary battery of the present invention, the positive electrode current collector on the surface of which the positive electrode active material and the binder are provided is rolled at a temperature equal to or higher than the first temperature and lower than the second temperature. This allows the tensile extension percentage of the positive electrode to be 3% or more in a subsequent heat treatment. Consequently, it is possible to prevent breakage of the positive electrode at the time of charge or crush, and therefore, safety of the nonaqueous electrolyte secondary battery can be ensured.

Further, according to the method for fabricating the nonaqueous electrolyte secondary battery of the present invention, an elastic coefficient of the binder of the positive electrode is decreased at the time of rolling. Thus, capacity of the nonaqueous electrolyte secondary battery can be increased.

Moreover, according to the method for fabricating the nonaqueous electrolyte secondary battery of the present invention, the positive electrode current collector contains iron. Therefore, it is possible to reduce the temperature of the heat treatment after rolling, and possible to reduce the time of the heat treatment after rolling. Specifically, the positive electrode current collector only needs to contain iron in an amount of 1.2 weight percent or more with respect to aluminum.

According to the method for fabricating the nonaqueous electrolyte secondary battery of the present invention, the second temperature can be increased if the iron content in the positive electrode current collector is low. If the second temperature is high, the temperature at rolling can be increased. This means that it is possible to further reduce the elastic coefficient of the binder of the positive electrode. Therefore, capacity of the nonaqueous electrolyte secondary battery can be increased more.

The "tensile extension percentage of the positive electrode" as used in the present specification is a value measured according to the following method. First, a positive electrode for measurement (which has a width of 15 mm and a length of 20 mm along a longitudinal direction) is prepared. Next, one end of the positive electrode for measurement along the longitudinal direction is fixed, and the other end of the positive electrode for measurement along the longitudinal direction is extended at a speed of 20 mm/min along the longitudinal direction. After that, the length of the positive electrode for measurement along the longitudinal direction immediately before breakage is measured. Using the measured length and the length of the positive electrode for measurement along the longitudinal direction before extension, the tensile extension percentage of the positive electrode along the longitudinal direction is calculated.

The "porosity of the positive electrode mixture layer" as used in the present specification is a ratio of the total volume of space present in the positive electrode mixture layer to the total volume of the positive electrode mixture layer, and is calculated using the following equation.

### Porosity

### = 1-(volume of component 1+volume of component 2+volume of component 3)/(volume of positive electrode mixture layer)

Here, the volume of the positive electrode mixture layer is calculated in such a manner that the thickness of the positive electrode mixture layer is measured using a scanning electron microscope, and thereafter that the positive electrode is cut to a predetermined dimension.

The component 1 is a component in the positive electrode mixture that is dissoluble in acid. The component 2 is a component in the positive electrode mixture that is insoluble in acid and has thermal volatility. The component 3 is a component in the positive electrode mixture that is insoluble in acid and has no thermal volatility. The volumes of the components 1-3 are calculated by the following method.

First, the positive electrode cut to a predetermined dimension is separated into a positive electrode current collector and a positive electrode mixture layer. Then, the weight of the positive electrode mixture is measured. Subsequently, the positive electrode mixture is dissolved in acid to separate into a component dissolved in the acid and a component not dissolved in the acid. The component dissolved in the acid is subjected to a qualitative and quantitative analysis using a fluorescent X-ray and to a structure analysis by X-ray diffraction. From the result of the qualitative and quantitative analysis and the result of the structure analysis, the lattice constant and the molecular weight of the component are calculated. The volume of the component 1 can be calculated this way.

Turning to the component not dissolved in the acid, the weight of the component is measured first. Then, the component is subjected to a qualitative analysis using gas chromatography/mass spectrometry, and then is subjected to a thermogravimetric analysis. As a result, among the components not dissolved in the acid, the component having thermal volatility is volatized. However, it is not always the case that all the components having thermal volatility among the components not dissolved in the acid are volatize d in this thermogravimetric analysis. For this reason, it is difficult to calculate the weight of the component having thermal volatility among the components not dissolved in the acid, from the result of the thermogravimetric analysis (the result of the thermogravimetric analysis on the sample). In view of this, a reference sample of the component having thermal volatility among the components not dissolved in the acid is prepared, and subjected to a thermogravimetric analysis (from the result of the qualitative analysis using gas chromatography/mass spectrometry, the compositions of the component having thermal volatility among the components not dissolved in the acid have been known). Then, from the result of the thermogravimetric analysis on the sample and the result of the thermogravimetric analysis on the reference sample, the weight of the component having thermal volatility among the components not dissolved in the acid is calculated. Using the weight thus calculated and the true density of the component having thermal volatility among the components not dissolved in the acid, the volume of the component 2 is calculated.

Once the weight of the component having thermal volatility among the components not dissolved in the acid is known, the weight of the component having no thermal volatility among the components not dissolved in the acid can be obtained from the result of the thermogravimetric analysis on the sample and the weight of the sample. Using the weight thus obtained and the true specific gravity of the component having no thermal volatility among the components not dissolved in the acid, the volume of the component 3 is calculated.

### ADVANTAGES OF THE INVENTION

According to the present invention, it is possible to provide a nonaqueous electrolyte secondary battery having improved safety and high capacity.

### BRIEF DESCRIPTION OF THE DRAWINGS

[FIG. 1] FIG. 1(a) is a cross section of a state in which a positive electrode not subjected to a heat treatment after rolling is extended. FIG. 1(b) is a cross section of a state in which a positive electrode subjected to a heat treatment after rolling is extended.
[FIG. 2] FIG. 2 is a table showing a result of an experiment on a relationship between a tensile extension percentage after rolling and a tensile extension percentage after a heat treatment after rolling, in the case where a foil made of aluminum is used as a positive electrode current collector.
[FIG. 3] FIG. 3 is a table showing a result of an experiment on a relationship between a tensile extension percentage after rolling and a tensile extension percentage after a heat treatment after rolling, in which a temperature at rolling and a temperature of the heat treatment after rolling are changed, in the case where a foil made of aluminum alloy containing iron is used as a positive electrode current collector.
[FIG. 4] FIG. 4 is a table showing a result of an experiment on a relationship between a temperature of a heat treatment or a temperature at rolling and a tensile extension percentage.
[FIG. 5] FIG. 5 is a schematic diagram showing temperature dependency of a state of aluminum alloy containing iron.
[FIG. 6] FIG. 6 is a table showing another result of an experiment on a relationship between a temperature of a heat treatment or a temperature at rolling and a tensile extension percentage.
[FIG. 7] FIG. 7 is a cross section of a nonaqueous electrolyte secondary battery according to one embodiment of the present invention.
[FIG. 8] FIG. 8 is a cross section of an electrode group according to one embodiment of the present invention.
[FIG. 9] FIG. 9 is a graph showing temperature dependency of an elastic coefficient of a binder of a positive electrode.
[FIG. 10] FIG. 10 is a table showing results obtained in examples.

### DESCRIPTION OF EMBODIMENTS

Before describing an embodiment of the present invention, the reason why the present invention was made is explained.

As mentioned earlier, there has been a demand for increasing the capacity of the nonaqueous electrolyte secondary battery. To respond to this demand, increasing a filling density of an active material in a mixture layer has been considered.

It is known that if a filling density of a negative electrode active material in a negative electrode mixture layer is increased too much, the amount of lithium ions intercalated by the negative electrode is significantly reduced, and therefore that lithium is easily deposited on the surface of the negative electrode, resulting in a reduction in safety of the nonaqueous electrolyte secondary battery. On the other hand, it is considered that such a problem as described above does not occur if a filling density of a positive electrode active material in a positive electrode mixture layer is increased. In view of this, the inventors of the present application considered that the capacity of the nonaqueous electrolyte secondary battery might be increased by increasing the filling density of the positive electrode active material in the positive electrode mixture layer, and considered increasing the filling density of the positive electrode active material in the positive electrode mixture layer using the method disclosed in Patent Document 2.

However, if the filling density of the positive electrode active material in the positive electrode mixture layer becomes high, the flexibility of the positive electrode is reduced, which results in a reduction in performance and safety of the nonaqueous electrolyte secondary battery. For example, if the flexibility of the positive electrode is reduced, the positive electrode does not tend to be deformed according to the deformation of the negative electrode at the time of charge or discharge (i.e., deformation of the negative electrode due to expansion and shrinkage of the negative electrode active material). Thus, the positive electrode may be broken at the time of charge or discharge, resulting in reduction in performance of the nonaqueous electrolyte secondary battery. Moreover, if the positive electrode is broken, the broken positive electrode may penetrate the porous insulating layer to come in contact with the negative electrode, which results in occurrence of an internal short circuit. Furth er, in the case where an electrode group of a wound type (an electrode group formed by winding a positive electrode and a negative electrode, with a porous insulating layer interposed between the positive electrode and the negative electrode) is formed, the positive electrode may be broken if the positive electrode has less flexibility. This may lead to a reduction in fabrication yield of the nonaqueous electrolyte secondary battery, and may further cause an internal short circuit.

The inventors of the present application disclose in WO2009/019861 (hereinafter referred to as "Patent Document 3") a method for improving the flexibility of a positive electrode.

Specifically, first, a positive electrode mixture slurry containing a positive electrode active material, a conductive agent, and a binder is applied to a surface of a positive electrode current collector and dried, thereby forming a positive electrode current collector on the surface of which the positive electrode active material, the conductive agent, the binder, etc. are provided. Next, the positive electrode current collector (i.e., the positive electrode current collector on the surface of which the positive electrode active material, the conductive agent, the binder, etc. are provided) is rolled and subjected to a heat treatment. By providing, after rolling, a heat treatment to the positive electrode current collector on the surface of which the positive electrode active material, the conductive agent, the binder, etc. are provided (this process may be simply referred to as "providing a heat treatment after rolling" or a "heat treatment after rolling"), it is possible to increase a tensile extension percentage of the positive electrode from a tensile extension percentage of the positive electrode before the heat treatment.

The reason why it is possible to increase the tensile extension percentage of the positive electrode from the tensile extension percentage of the positive electrode before the heat treatment by providing the heat treatment after rolling may be because of the following mechanism.

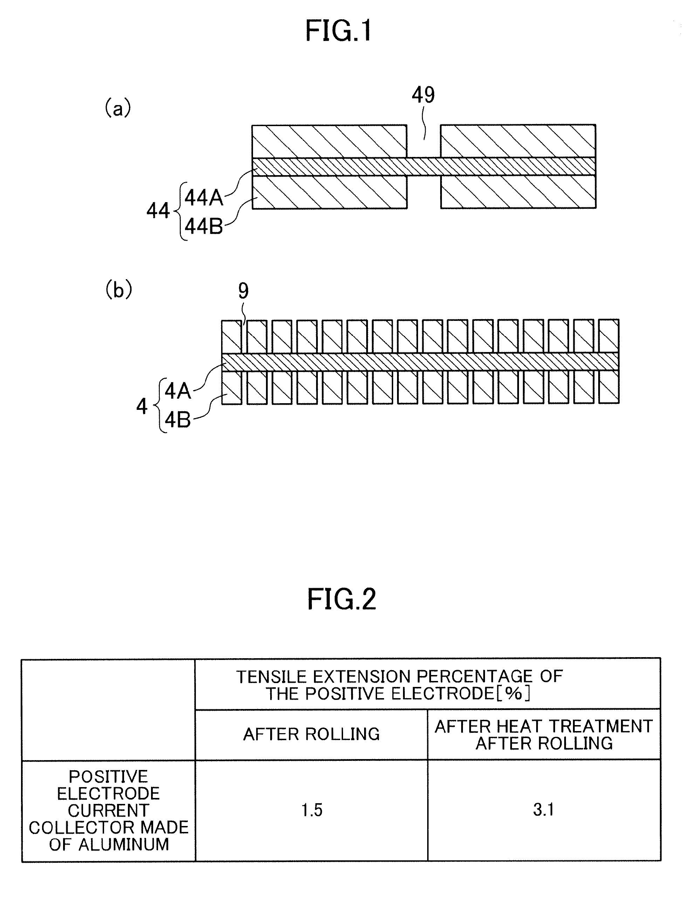

FIG. 1(a) and FIG. 1(b) are cross sections of positive electrodes. FIG. 1(a) is a cross section of a state in which a positive electrode not subjected to a heat treatment after rolling is extended. FIG. 1(b) is a cross section of a state in which a positive electrode subjected to a heat treatment after rolling is extended.

The positive electrode mixture layer is formed on the surface of the positive electrode current collector. Thus, the tensile extension percentage of the positive electrode is not restricted by the tensile extension percentage specific to the positive electrode current collector. In general, the tensile extension percentage of the positive electrode mixture layer is lower than the tensile extension percentage of the positive electrode current collector. Thus, in the case where the positive electrode 44 to which the heat treatment after rolling was not provided is extended, a large crack is caused in the positive electrode mixture layer 44B as shown in FIG. 1(a), and the positive electrode 44 is broken. This may be because a tensile stress in the positive electrode mixture layer 44B is increased as the positive electrode 44 is extended, and the tensile stress applied to the positive electrode current collector 44A is concentrated on the portion at which the large crack is caused. As a result, the positive electrode current collector 44A is broken.

On the other hand, in the case where the positive electrode 4 to which the heat treatment after rolling was provided is extended, the positive electrode 4 continues to extend while making a lot of fine cracks 9 in the positive electrode mixture layer 4B because the positive electrode current collector 4A is softened (FIG. 1(b)), until the positive electrode 4 is finally broken. This may be because the tensile stress applied to the positive electrode current collector 4A is deconcentrated due to the occurrence of the fine cracks 9 in the positive electrode mixture layer 4B, and thus, the positive electrode current collector 4A was not much affected by the occurrence of the cracks 9. Therefore, the positive electrode 4 continues to extend until the positive electrode 4 has a given size, without being broken simultaneously with the occurrence of the cracks 9, and the positive electrode current collector 4A is broken when the tensile stress reaches a given magnitude (a value close to the tensile extension percentage specific to the positive electrode current collector 4A).

Further, the inventors of the present application disclose in Patent Document 3 that by using a positive electrode current collector made of aluminum alloy containing iron, it is possible to reduce the temperature of the heat treatment after rolling and shorten the time of the heat treatment after rolling. To increase the tensile extension percentage of the positive electrode, it is preferable that the temperature of the heat treatment after rolling is high and the time of the heat treatment after rolling is long. However, if the temperature of the heat treatment after rolling is high, or if the time of the heat treatment after rolling is long, the binder of the positive electrode may be melted and cover the positive electrode active material, resulting in a reduction in battery capacity. To increase tensile extension percentage of the positive electrode without causing a reduction in battery capacity, it is preferable to use a positive electrode current collector made of aluminum alloy containing iron.

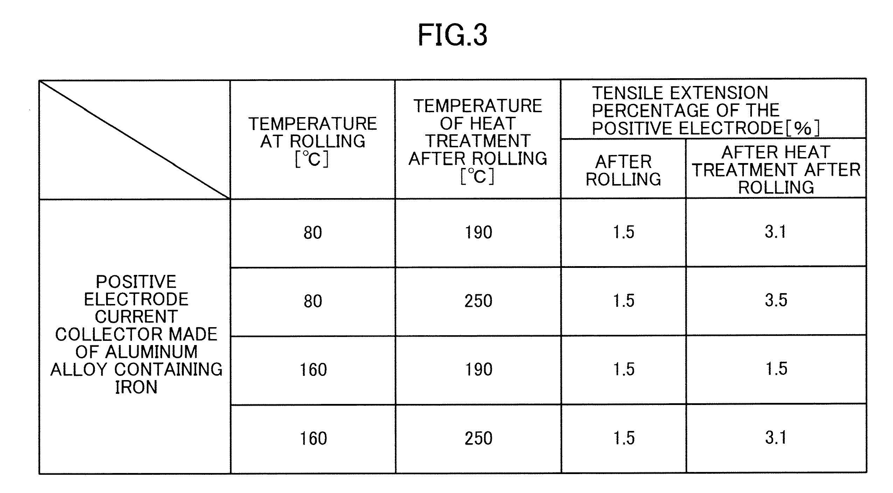

In view of this, the inventors of the present application considered that it may be possible to ensure the flexibility of the positive electrode, while increasing the capacity of the nonaqueous electrolyte secondary battery, by providing a heat treatment after rolling using a roll heated to a high temperature to a positive electrode current collector on the surface of which the positive electrode active material, the conductive agent, the binder, etc. were provided. The inventors of the present application fabricated the positive electrode using the above technique, and measured the tensile extension percentage of the obtained positive electrode. As materials for the positive electrode current collector, a foil made of aluminum and a foil made of aluminum alloy containing iron were prepared. The results are shown in FIG. 2 and FIG. 3.

In the case where a foil made of aluminum was used as a positive electrode current collector, the tensile extension percentage of the positive electrode was increased if the heat treatment after rolling was provided, regardless of the temperature at the rolling (regardless of the temperature of the roll) as shown in FIG. 2. This result is as disclosed in Patent Document 3. The term "AFTER ROLLING" in FIG. 2 refers to a time after rolling and before the heat treatment after rolling.

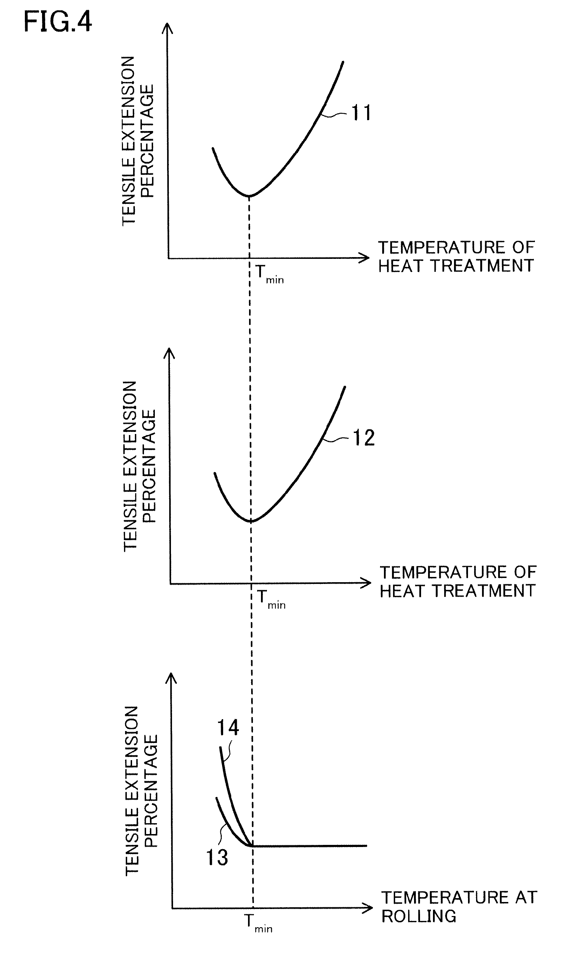

On the other hand, in the case where a foil made of aluminum alloy containing iron was used as a positive electrode current collector, there was a case in which the tensile extension percentage of the positive electrode was not increased even if the heat treatment after rolling was provided as shown in FIG. 3. Specifically, if the rolling was performed using a roll heated to 80°C, the tensile extension percentage of the positive electrode was increased by a heat treatment after rolling in both of the cases in which the temperature of the heat treatment after rolling was set to 190°C and the temperature of the heat treatment after rolling was set to 250°C. However, if the rolling was performed using a roll heated to 160°C, the tensile extension percentage of the positive electrode was not increased by the heat treatment after rolling in the case where the temperature of the heat treatment after rolling was set to 190°C, and the tensile extension percentage of the positive electrode was increased in the case where the temperature of the heat treatment after rolling was set to 250°C. That is, it turned out that in the case where a foil made of aluminum alloy containing iron was used as the positive electrode current collector, the tensile extension percentage of the positive electrode could be increased by the heat treatment after rolling if the temperature of the rolling was relatively low, and if the temperature of the rolling was relatively high, the temperature of the heat treatment after rolling must be 250°C or more so that the tensile extension percentage of the positive electrode be increased. To determine the reason for these results, the inventors of the present application conducted the following experiments based on the finding that the tensile extension percentage of the positive electrode current collector reached a minimum at a certain temperature. The results are shown in FIG. 4.

First, a positive electrode current collector made of aluminum alloy containing iron was prepared. A heat treatment at a temperature of 80-200°C was provided to the positive electrode current collector, and thereafter, a tensile extension percentage of the positive electrode current collector was measured. It turned out that the tensile extension percentage of the positive electrode current collector reached a minimum at a temperature Tₘᵢₙ as shown by line 11 in FIG. 4. Using this positive electrode current collector, the following three positive electrodes for experiment were fabricated to check the temperature dependency of the tensile extension percentage of each of the positive electrodes for experiment.

The first positive electrode for experiment was fabricated in accordance with the following method. First, a positive electrode active material, a conductive agent, a binder, etc. were provided on the surface of a positive electrode current collector. Then, the positive electrode current collector on the surface of which the positive electrode active material, the conductive agent, the binder, etc. were provided was subjected to a heat treatment at a temperature of 80-200°C. The first positive electrode for experiment was fabricated this way, and a relationship between the temperature of the heat treatment and the tensile extension percentage of the first positive electrode for experiment was checked. It turned out that the tensile extension percentage of the first positive electrode for experiment reached a minimum at a temperature Tₘᵢₙ as shown by line 12 in FIG. 4.

The second positive electrode for experiment was fabricated in accordance with the following method. First, a positive electrode active material, a conductive agent, a binder, etc. were provided on a positive electrode current collector. Then, using a roll heated to a temperature of 80-160°C, the positive electrode current collector on the surface of which the positive electrode active material, the conductive agent, the binder, etc. were provided was rolled. The second positive electrode for experiment was fabricated this way, and a relationship between the temperature of the roll (this temperature is referred to as "TEMPERATURE AT ROLLING" in FIG. 4) and the tensile extension percentage of the second positive electrode for experiment was checked. It turned out, as shown by line 13 in FIG. 4, that if the temperature at rolling was less than Tₘᵢₙ, the tensile extension percentage of the second positive electrode for experiment was reduced as the temperature at rolling was increased, and if the temperature at rolling was equal to or more than Tₘᵢₙ, the tensile extension percentage of the positive electrode was not changed even by an increase in temperature at rolling.

The third positive electrode for experiment was fabricated in accordance with the following method. First, a positive electrode active material, a conductive agent, a binder, etc. were provided on the surface of a positive electrode current collector. Then, using a roll heated to a temperature of 80-160°C, the positive electrode current collector on the surface of which the positive electrode active material, the conductive agent, the binder, etc. were provided was rolled. After that, a heat treatment at a temperature of 190°C was provided to the rolled positive electrode current collector. The third positive electrode for experiment was fabricated this way, and a relationship between the temperature of the roll and the tensile extension percentage of the third positive electrode for experiment was checked. It turned out that the tensile extension percentage of the third positive electrode for experiment was larger than the tensile extension percentage of the second positive electrode for experiment, when the temperature at rolling was lower than Tₘᵢₙ, as shown by line 14 in FIG. 4.

Here, the inventors of the present application acknowledge that the tensile extension percentage of the positive electrode is increased by rolling at a temperature of Tₘᵢₙ or more and then providing a heat treatment at a temperature of 250°C or more.

FIG. 4 shows the temperature dependency of the tensile extension percentages of the positive electrode current collector and the first to third positive electrodes for experiment, while focusing on the point that the tensile extension percentages of the positive electrode current collector and the first positive electrode for experiment reach a minimum at a certain temperature, and the point that the tensile extension percentages of the second and the third positive electrodes for experiment become constant after a certain temperature. Thus, the temperature dependency of the tensile extension percentage of the positive electrode current collector is not limited to the shape of the line 11, and the temperature dependency of the first to third positive electrodes for experiment is not limited to the shapes of the lines 12-14, respectively.

Further, the temperatures Tₘᵢₙ on the line 12, line 13 and line 14 were the same as the temperature Tₘᵢₙ on the line 11 in some cases as shown in FIG. 4, or were slightly different (± 5°C or so) from the temperature Tₘᵢₙ on the line 11 in other cases.

To summarize these results, in the case where rolling was performed at a temperature lower than Tₘᵢₙ on the positive electrode current collector which contains iron and on the surface of which a positive electrode active material, a conductive agent, a binder, etc. were provided, the tensile extension percentage of the positive electrode was increased by the heat treatment at 190°C after rolling. On the other hand, in the case where rolling was performed at a temperature of Tₘᵢₙ or more on the positive electrode current collector which contains iron and on the surface of which a positive electrode active material, a conductive agent, a binder, etc. were provided, the tensile extension percentage of the positive electrode was not much increased by the heat treatment at 190°C after rolling. The inventors of the present application consider the reason for this as follows.

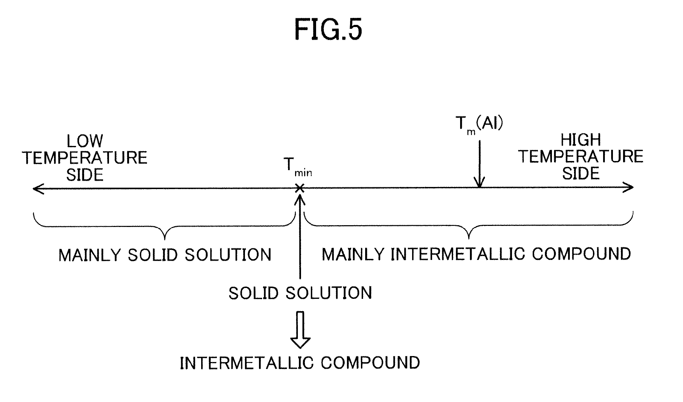

FIG. 5 is a schematic view of the temperature dependency of a state of aluminum alloy containing iron.

First, the inventors of the present application consider the reason why a softening temperature of aluminum alloy containing iron is lower than a softening temperature Tm(Al) of pure aluminum as follows. An aluminum alloy containing iron changes from a solid solution of iron and aluminum to an intermetallic compound (e.g., Fe₃Al) at a temperature lower than the softening temperature Tm(Al) of pure aluminum. Aluminum crystal grains become coarse at this time. For this reason, the softening temperature of the aluminum alloy containing iron becomes lower than the softening temperature Tm(Al) of pure aluminum.

The temperature at which the solid solution changes to the intermetallic compound is the temperature Tₘᵢₙ at which a tensile extension percentage of the positive electrode current collector reaches a minimum, as shown in FIG. 5. Thus, if rolled at a temperature lower than the temperature Tₘᵢₙ, the positive electrode current collector is a solid solution mainly of iron and aluminum. Therefore, even if work hardening of the aluminum occurs due to the rolling, it is possible to increase the tensile extension percentage of the positive electrode by the heat treatment after rolling. However, if rolled at a temperature equal to or larger than the temperature Thin, the positive electrode current collector is in the state of changing from the solid solution to the intermetallic compound, and therefore, work hardening of the aluminum occurs due to the rolling simultaneously with the start of generation of the intermetallic compound. Thus, unlike the case in which the positive electrode current collector is a solid solution, the effect of containing iron is less significant even if a heat treatment after rolling is performed to increase the tensile extension percentage of the positive electrode. This means that it is difficult to increase the tensile extension percentage of the positive electrode unless the temperature of the heat treatment after rolling is set to equal to or higher than the softening temperature Tm(Al) of pure aluminum.

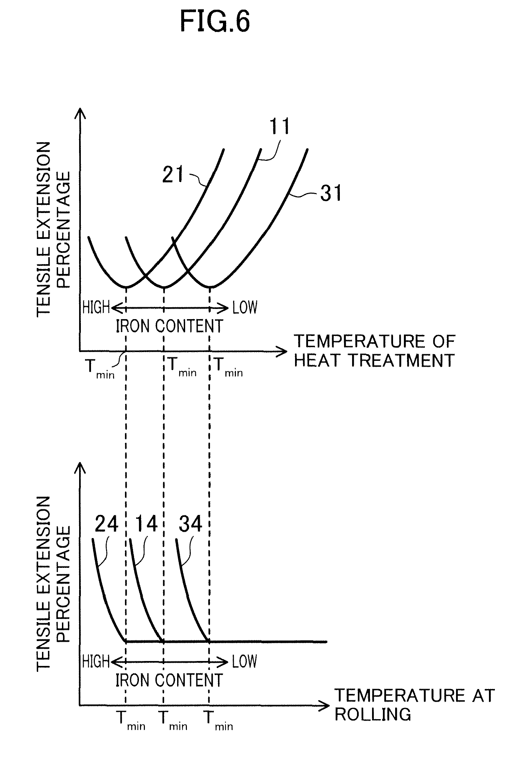

Further, the inventors of the present application conducted a similar experiment using positive electrode current collectors each having a different iron content, and it turned out that the temperature Tₘᵢₙ depends on the iron content in the positive electrode current collector. The experimental result is shown in FIG. 6.

The temperature dependency of the tensile extension percentage of the positive electrode current collector shifted to the low temperature side (from line 11 to line 21) as the iron content in the positive electrode current collector was increased, and shifted to the high temperature side (from line 11 to line 31) as the iron content in the positive electrode current collector was reduced. That is, it turned out that the temperature Tₘᵢₙ at which the tensile extension percentage of the positive electrode current collector reaches a minimum was low in the case where the iron content in the positive electrode current collector was high, and the temperature Tₘᵢₙ was high in the case where the iron content in the positive electrode current collector was low. Specifically, the temperature Tₘᵢₙ at which the tensile extension percentage of the positive electrode current collector reaches a minimum is 100°C or so in the case where the positive electrode current collector contained iron in an mount of 1.5 weight percent (wt. %) with respect to aluminum, and the temperature Tₘᵢₙ was 130°C or so in the case where the positive electrode current collector contained iron in an amount of 1.2 wt. % with respect to aluminum.

Further, the temperature dependency of the tensile extension percentage of the third positive electrode for experiment shifted to the low temperature side (from line 14 to line 24) as the iron content in the positive electrode current collector was increased, and shifted to the high temperature side (from line 14 to line 34) as the iron content of the positive electrode current collector was reduced.

FIG. 6 shows the temperature dependency of the tensile extension percentages of the positive electrode current collector or the third positive electrode for experiment, while focusing on the relationship between the iron content in the positive electrode current collector and the temperature Tₘᵢₙ. Thus, the temperature dependency of the tensile extension percentage of the positive electrode current collector is not limited to the shapes of lines 11, 21 and 31. Further, the shapes of the lines 11, 21 and 31 were the same in some cases as showing in FIG. 6, or were slightly different in other cases. The same held true for the temperature dependency of the tensile extension percentage of the third positive electrode for experiment.

Although not shown in FIG. 6, the temperature dependency of the tensile extension percentage of the positive electrode current collector made of aluminum shifted to the high temperature side more than the line 31 in FIG. 6. That is, the temperature Tₘᵢₙ at which the tensile extension percentage of the positive electrode current collector made of aluminum reaches a minimum was higher than the temperature of the roll (80-160°C). This may indicate that the tensile extension percentage of the positive electrode was increased by the heat treatment after rolling even if a roll heated to 80-160°C was used, by using a foil made of aluminum as the positive electrode current collector, as shown in FIG. 2.

To summarize, the inventors of the present application considered that to increase the capacity of the nonaqueous electrolyte secondary battery without reducing flexibility of the positive electrode, and further to decrease reduction in battery capacity in the heat treatment after rolling, the positive electrode might be fabricated in accordance with the following method. First, a positive electrode current collector made of aluminum alloy containing iron is prepared. Then, a positive electrode active material, a binder, a conductive agent, etc. are provided on the surface of the positive electrode current collector. The positive electrode current collector on the surface of which the positive electrode active material, the binder, the conductive agent, etc. are provided is rolled using a roll heated to 80-160°C. After that, the rolled positive electrode is subjected to a heat treatment. However, it turned out that, in some cases, if the positive electrode was fabricated by this method, it may not be possible to increase the tensile extension percentage of the positive electrode even after the heat treatment after rolling from the tensile extension percentage of the positive electrode before the heat treatment. This newly identified problem was analyzed to find that if the rolling was performed at a temperature equal to or higher than the temperature Tₘᵢₙ at which the tensile extension percentage of the positive electrode current collector reached a minimum, it was impossible to increase the tensile extension percentage of the positive electrode even by the heat treatment after rolling. It also turned out that the temperature Tₘᵢₙ at which the tensile extension percentage of the positive electrode current collector reached a minimum was increased by reducing the iron content in the positive electrode current collector. The inventors of the present application made the present invention based on these findings. In other words, the present invention is to solve the above newly identified problem. An embodiment of the present invention will be described hereinafter with reference to the drawings. The present invention is not limited to the following embodiment.

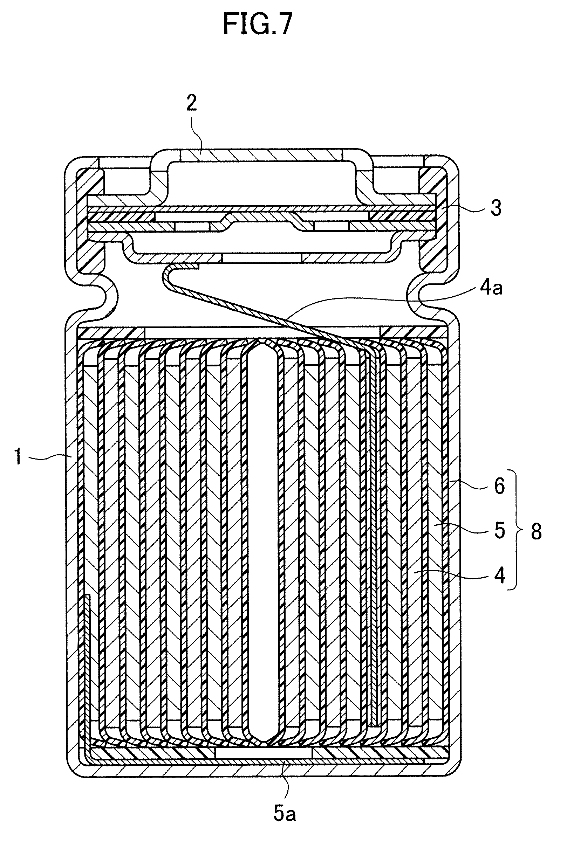

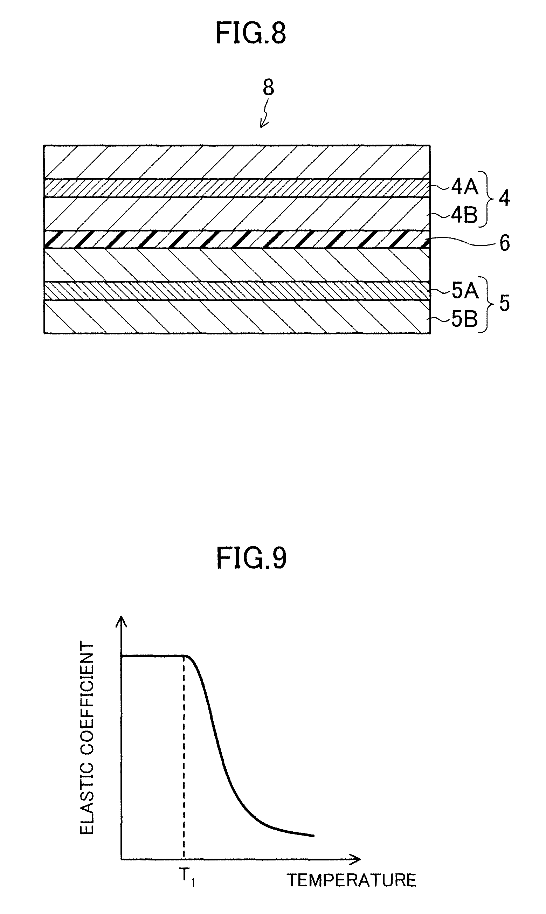

FIG. 7 is a cross section of a nonaqueous electrolyte secondary battery according to one embodiment of the present invention. FIG. 8 is a cross section of an electrode group according to the present embodiment.

In the nonaqueous electrolyte secondary battery according to the present embodiment, an electrode group 8 is placed in a battery case 1 together with an electrolyte (not shown). The battery case 1 has an opening. The opening is closed by a sealing plate 2 via a gasket 3.

In the electrode group 8, a positive electrode 4 and a negative electrode 5 are wound, with a porous insulating layer 6 interposed between the positive electrode 4 and the negative electrode 5. The positive electrode 4 includes a positive electrode current collector 4A. A positive electrode mixture layer 4B is provided to both surfaces of the positive electrode current collector 4A. A positive electrode lead 4a is connected to a portion at which the positive electrode current collector 4A is exposed. The negative electrode 5 includes a negative electrode current collector 5A. A negative electrode mixture layer 5B is provided to both surfaces of the negative electrode current collector 5A. A negative electrode lead 5a is connected to a portion at which the negative electrode current collector 5A is exposed. The positive electrode lead 4a is connected to the sealing plate 2, which also functions as a positive electrode terminal. The negative electrode lead 5a is connected to the battery case 1, which also functions as a negative electrode terminal. The positive electrode 4 according to the present embodiment will be described hereinafter in detail.

To respond to the recent demand for increasing capacity of the nonaqueous electrolyte secondary battery, the positive electrode 4 of the present embodiment is configured such that a filling density of the positive electrode active material in the positive electrode mixture layer 4B is higher than before, and such that porosity of the positive electrode mixture layer 4B is lower than before, e.g., equal to or lower than 17%. Therefore, the positive electrode mixture layer 4B is harder than before. However, the tensile extension percentage of the positive electrode 4 is equal to or more than 3%. Accordingly, when such a positive electrode 4 is extended, the positive electrode current collector 4A is extended while making fine cracks 9 in the positive electrode mixture layer 4B as shown in FIG. 1(b). In the positive electrode 4, the positive electrode current collector 4A is not broken simultaneously with the occurrence of the first crack in the positive electrode mixture layer 4B, but the positive electrode current collector 4A continues to extend for a while after the occurrence of the first crack without being broken, while making cracks in the positive electrode mixture layer 4B. Further, the tensile extension percentage of the positive electrode 4 is preferably equal to or less than 10%, because if the tensile extension percentage of the positive electrode 4 is more than 10%, the positive electrode 4 may be deformed when the positive electrode 4 is wound.

The positive electrode current collector 4A of the present embodiment is made of aluminum alloy containing iron. The higher the iron content in the positive electrode current collector 4A is, the more it is possible to reduce the time and temperature of the heat treatment after rolling. Thus, it is possible to prevent the binder from being melted in the positive electrode mixture layer 4B during the heat treatment after rolling and covering the positive electrode active material. On the other hand, the lower the iron content in the positive electrode current collector 4A is, the more it is possible to increase the temperature at rolling. Thus, it is possible to reduce the porosity of the positive electrode mixture layer 4B. In other words, the iron content in the positive electrode current collector 4A is preferably high to prevent a reduction in capacity due to the heat treatment after rolling, and is preferably low to increase the capacity. To obtain the both effects, it only needs to optimize the iron content in the positive electrode current collector 4A. It is possible to prevent a reduction in battery capacity due to the heat treatment after rolling if the positive electrode current collector 4A contains iron in an amount of 1.2 wt. % or more with respect to aluminum. It is possible to increase the capacity of the battery if the positive electrode current collector 4A contains iron in an amount of 1.5 wt. % or less with respect to aluminum. Consequently, the positive electrode current collector 4A preferably contains iron in an amount of 1.2 wt. % or more with respect to aluminum, and more preferably contains iron in amount of between 1.2 wt. % and 1.5 wt. % , both inclusive, with respect to aluminum.

Such a positive electrode 4 is fabricated according to the following method.

First, a positive electrode current collector 4A made of aluminum alloy containing iron is prepared. The positive electrode current collector 4A only needs to contain iron in an amount of 1.2 wt. % or more with respect to aluminum.

Next, a positive electrode mixture slurry containing a positive electrode active material, a binder, and a conductive agent is provided to both surfaces of the positive electrode current collector 4A (Step (a)). After that, the positive electrode mixture slurry is dried (Step (b)).

Then, the positive electrode current collector on both surfaces of which the positive electrode active material, the binder, and the conductive agent are provided is rolled at a predetermined temperature (Step (c)). For example, the positive electrode current collector on the both surfaces of which the positive electrode active material, the binder, and the conductive agent are provided may be rolled while being subjected to hot air, infrared rays, or electric heat; the positive electrode current collector on the both surfaces of which the positive electrode active material, the binder, and the conductive agent are provided may be rolled while being subjected to Induction Heating (IH); or the positive electrode current collector on the both surfaces of which the positive electrode active material, the binder, and the conductive agent are provided may be rolled using a roll heated to a predetermined temperature. Here, by rolling the positive electrode current collector on the both surfaces of which the positive electrode active material, the binder, and the conductive agent are provided, using a roll heated to a predetermined temperature, it is possible to shorten the time of the heat treatment and reduce energy loss. Thus, it is preferable to roll the positive electrode current collector on the both surfaces of which the positive electrode active material, the binder, and the conductive agent are provided, using a roll heated to a predetermined temperature.

The above predetermined temperature in this rolling process is T₁ or more but less than Tₘᵢₙ. The temperature T₁ (first temperature) will be described first using FIG. 9. FIG. 9 shows temperature dependency of an elastic coefficient of the binder of the positive electrode. The result of analyzing the temperature dependency of an elastic coefficient of the binder of the positive electrode shows that the elastic coefficient starts to decrease when the temperature of the binder of the positive electrode increases close to T₁, and further decreases when the temperature of the binder of the positive electrode further increases. Therefore, the elastic coefficient of the binder of the positive electrode does not much decrease if the above predetermined temperature in the rolling process is less than T₁. This means that it is difficult to provide high capacity nonaqueous electrolyte secondary batteries. Accordingly, the above predetermined temperature in the rolling process is T₁ or more.

Various types of materials are known as materials for a binder of a positive electrode. However, the temperature at which the elastic coefficient starts to decrease is 50°C or so, regardless of the types of the materials. Thus, the temperature T₁ only needs to be 50°C or so, and preferably 50°C or more.

The temperature Tₘᵢₙ (second temperature), as described above, is a temperature at which the tensile extension percentage of the positive electrode current collector 4A reaches a minimum. If the above predetermined temperature in the rolling process is Tₘᵢₙ or more, it is difficult to increase the tensile extension percentage of the positive electrode even by performing a heat treatment after rolling on the rolled positive electrode current collector, as shown in FIG. 4 and FIG. 6. Accordingly, the above predetermined temperature in the rolling process is less than Tₘᵢₙ.

A pressure in the rolling process will be briefly described. If a pressure in the rolling process is too low, it is difficult to fill the positive electrode mixture layer with the positive electrode active material at a high density. If a pressure in the rolling process is too high, it may lead to a crack in the positive electrode at the time of rolling. Thus, a pressure in a range of between 1.0 ton/cm and 1.8 ton/cm, both inclusive, may be applied in the rolling process.

After completion of the rolling process, the rolled positive electrode current collector is subjected to a heat treatment (Step (d)). Specifically, the rolled positive electrode current collector may be subjected to hot air, infrared rays, or electric heat; the rolled positive electrode current collector may be subjected to IH; or a roll heated to a heat treatment temperature shown below may be brought into contact with the rolled positive electrode current collector. For the reasons described in the description of the rolling process, it is preferable that a roll heated to a heat treatment temperature as shown below is brought into contact with the rolled positive electrode current collector.

A heat treatment temperature in a process of heat treatment after rolling will be briefly described. The positive electrode current collector 4A of the present embodiment contains iron. Therefore, the positive electrode current collector 4A tends to be softened at a temperature lower than a temperature at which a positive electrode current collector made of only aluminum is softened. Thus, the temperature of the heat treatment after rolling only needs to be equal to or more than a softening temperature (160°C or so) of the positive electrode current collector 4A, and equal to or less than a melting temperature (200°C or so) of the binder of the positive electrode. This allows the tensile extension percentage of the positive electrode to be a desired value, while reducing melting and decomposition of the binder of the positive electrode. The positive electrode 4 of the present embodiment can be fabricated in this way.

To achieve high capacity, the above predetermined temperature in the rolling process is preferably high, i.e., the iron content in the positive electrode current collector is preferably low. On the other hand, to decrease reduction in battery capacity by the heat treatment after rolling, the temperature of the heat treatment after rolling is preferably low, i.e., the iron content in the positive electrode current collector is preferably high. The positive electrode current collector in the present embodiment contains iron in an amount of between 1.2 wt. % and 1.5 wt. %, both inclusive, with respect to aluminum. Thus, it is possible to decrease reduction in battery capacity during the heat treatment after rolling, while achieving high capacity.

The time of the heat treatment in the process of heat treatment after rolling is not specifically limited, but can be appropriately determined. One example of the time of the heat treatment may be in a range of between 0.1 second and 5 hours, both inclusive, or may be in a range of between 10 seconds and one hour, both inclusive.

As described above, in the present embodiment, the positive electrode current collector on both surfaces of which a positive electrode active material and a binder are provided is rolled at a temperature of T₁ or more but less than Tₘᵢₙ. This can reduce the elastic coefficient of the binder of the positive electrode at the time of rolling, and therefore, it is possible to form a positive electrode mixture layer 4B filled with a positive electrode active material at a high density on the positive electrode current collector 4A. Thus, high capacity nonaqueous electrolyte secondary batteries can be provided. Moreover, it is possible to roll the positive electrode current collector on the both surfaces of which a positive electrode active material and a binder are provided, without forming an intermetallic compound from aluminum and iron on the positive electrode current collector 4A. Thus, the tensile extension percentage of the positive electrode 4 can be 3% or more by the heat treatment after rolling. That is, it is possible to decrease reduction in flexibility of the positive electrode due to increased capacity.

Specifically, in the present embodiment, the tensile extension percentage of the positive electrode 4 can be 3% or more, while achieving high capacity of the battery. Thus, the tensile extension percentage of the positive electrode 4 can be increased to approximately the same tensile extension percentage of the negative electrode 5 or the porous insulating layer 6. As a result, it is possible to form the electrode group 8 without breakage of the positive electrode 4. Further, the positive electrode 4 is deformed at the time of charge or discharge according to expansion and shrinkage of the negative electrode active material. It is thus possible to prevent buckling of the electrode group or breakage of the electrode plate. Moreover, at the time of crush, the positive electrode can be prevented from being broken before the negative electrode is broken and breaking through the porous insulating layer. Thus, occurrence of an internal short circuit can be avoided. As described, according to the present embodiment, it is possible to provide high capacity nonaqueous electrolyte secondary batteries whose yield and safety are ensured.

Typical examples of the materials for the positive electrode, the negative electrode, the porous insulating layer, and the nonaqueous electrolyte in the present embodiment will be shown below. Of course, the materials for the positive electrode, the negative electrode, the porous insulating layer, and the nonaqueous electrolyte in the present embodiment are not limited to the typical examples shown below.

The positive electrode current collector 4A may be a foil or a plate made of aluminum alloy containing iron. The foil or plate may have a plurality of pores.

The positive electrode mixture layer 4B can contain a binder, a conductive agent, etc. in addition to a positive electrode active material. Examples of the positive electrode active material include a lithium composite metal oxide. Typical materials include LiCoO₂, LiNiO₂ LiMnO₂ and LiCoNiO₂ Preferable examples of the binder include PVDF, a PVDF derivative, and a rubber-based binder (e.g., fluororubber and acrylic rubber). Examples of the conductive agent include graphites such as black lead and carbon blacks such as acetylene black.

A volume of the positive electrode mixture layer 4B that is occupied by the binder is preferably in a range of between 1 % and 6%, both inclusive, of a volume of the positive electrode mixture layer 4B that is occupied by the positive electrode active material. This makes it possible to minimize an area in which the positive electrode active material is covered with the binder melted at the heat treatment after rolling. As a result, it is possible to prevent a reduction in battery capacity due to the heat treatment after rolling. Moreover, since the volume of the positive electrode mixture layer 4B that is occupied by the binder is 1% or more of the volume of the positive electrode mixture layer 4B that is occupied by the positive electrode active material, it is possible to have the positive electrode active material adhere to the positive electrode current collector.

A volume of the positive electrode mixture layer 4B that is occupied by the conductive agent is preferably in a range of between 1% and 6%, both inclusive, of a volume of the positive electrode mixture layer 4B that is occupied by the positive electrode active material. This makes it possible to decrease reduction in cycle characteristics without reduction in battery capacity, even if the porosity of the positive electrode mixture layer 4B is 17% or less.

A plate made of such as copper, stainless steel, or nickel can be used as the negative electrode current collector 5A. The plate may have a plurality of pores.

The negative electrode mixture layer 5B can contain a binder etc. in addition to a negative electrode active material. Examples of the negative electrode active material include black lead, a carbon material such as carbon fiber, and a silicon compound such as siox.

The negative electrode 5 is fabricated according to the following method, for example. First, a negative electrode mixture slurry containing a negative electrode active material, a binder, etc. is prepared, and the negative electrode mixture slurry is applied to both surfaces of the negative electrode current collector 5A and is dried. Next, the negative electrode current collector on the both surfaces of which the negative electrode active material is provided is rolled. A heat treatment may be performed after rolling at a predetermined temperature and for a predetermined time.

Examples of the porous insulating layer 6 include a microporous thin film, woven fabric, and nonwoven fabric which have high ion permeability, a predetermined mechanical strength, and a predetermined insulation property. As the porous insulating layer 6, it is in particular preferable to use, for example, polyolefin such as polypropylene or polyethylene. Polyolefin has high durability and a shutdown mechanism. Thus, safety of the nonaqueous electrolyte secondary battery can be increased. In the case where a microporous thin film is used as the porous insulating layer 6, the microporous thin film may be a single-layer film made of a material of one type, or may be a composite film or a multilayer film made of two or more types of materials.

The nonaqueous electrolyte contains an electrolyte and a nonaqueous solvent in which the electrolyte is dissolved.

A known nonaqueous solvent can be used as the nonaqueous solvent. The type of this nonaqueous solvent is not specifically limited, and one of cyclic carbonate, chain carbonate, and cyclic carboxylate may be solely used, or two or more of them may be mixed.

As the electrolyte, for example, one of LiClO₄, LiBF₄, LiPF₆, LiAlCl₄, LiSbF₆, LiSCN, LiCF₃SO₃, LiCF₃CO₂, LiAsF₆, LIB₁₀Cl₁₀, lower aliphatic lithium carboxylate, LiCl, LiBr, LiI, chloroborane lithium, borates, and imidates may be solely used, or two or more of them may be combined. The amount of the electrolyte dissolved in the nonaqueous solvent is preferably in the range of between 0.5 mol/m3 and 2 mol/m3, both inclusive.

Further, the nonaqueous electrolyte may contain an additive which is decomposed on the negative electrode and forms, on the negative electrode, a coating having high lithium ion conductivity to enhance the charge-discharge efficiency of the battery, in addition to the electrolyte and the nonaqueous solvent. As the additive having such a function, for example, one of vinylene carbonate (VC), vinyl ethylene carbonate (VEC) and divinyl ethylene carbonate may be solely used, or two or more of them may be combined.

A suitable embodiment of the present invention was explained above. However, the present invention is not limited to the above description, and of course, various changes can be made. For example, the nonaqueous electrolyte secondary battery was described in the above embodiment, taking a cylindrical lithium ion secondary battery as an example of the nonaqueous electrolyte secondary battery. However, the nonaqueous electrolyte secondary battery may be a rectangular lithium ion secondary battery or a nickel hydride storage battery as long as the effects of the present invention can be obtained.

In the nonaqueous electrolyte secondary battery, current may be collected through the lead as described above, or may be collected through a current collector plate. It is possible to reduce a resistance at the time of current collection by using a current collector plate for collecting current.

To achieve high capacity, the porosity of the positive electrode mixture layer is preferably low. Specifically, the porosity of the positive electrode mixture layer is preferably 15% or less, and more preferably 10% or less. However, if the porosity of the positive electrode mixture layer is too low, it is difficult for the positive electrode mixture layer to hold the nonaqueous electrolyte. It is preferable that the porosity of the positive electrode mixture layer is 3% or more to achieve high capacity while ensuring the holding of the nonaqueous electrolyte by the positive electrode mixture layer.

### EXAMPLE

In the present example, batteries 1-6 were fabricated in accordance with the following method, and the effects obtained in the above embodiment were examined.

### 1. Method of Experiment

### (a) Method for Fabricating Nonaqueous Electrolyte Secondary Battery

### (Battery 1)

### (Formation of Positive Electrode)

First, a positive electrode mixture slurry was obtained by mixing acetylene black (a conductive agent), a solution obtained by dissolving poly(vinylidene fluoride) (abbreviated as "PVDF") (a binder) in a solvent of N-methylpyrrolidone (abbreviated as "NMP"), and LiNi_{0.82}Co_{0.15}Al_{0.03}O₂ (a positive electrode active material) whose average particle size is 10µm. Here, the positive electrode mixture slurry was prepared so as to satisfy LiNi_{0.82}Co_{0.15}Al_{0.03}O₂):(acetylene black):(poly(vinylidene fluoride)) = 100:4.5:4.7 in a volume ratio.

Next, this positive electrode mixture slurry was applied to both surfaces of aluminum alloy foil, BESPA FS115 (A8021H-H18, a positive electrode current collector, a temperature Tₘᵢₙ=130°C), produced by SUMIKEI ALUMINUM FOIL, Co., Ltd., having a thickness of 15 µm, and then dried. Here, no positive electrode mixture slurry was provided to a portion of the surface of the positive electrode current collector to which portion a positive electrode lead was to be attached.

After that, the positive electrode current collector on the both surfaces of which the positive electrode active material and others were provided was rolled by applying a pressure of 1.8 ton/cm. As a result, a positive electrode mixture layer was formed on the both surfaces of the positive electrode current collector. Here, the porosity of the positive electrode mixture layer was 16%.

Then, a roll (produced by TOKUDEN CO., LTD.) heated to 190°C was brought into contact with the rolled positive electrode current collector for one minute. After that, the positive electrode current collector was cut to a predetermined dimension, thereby obtaining a positive electrode.

### (Formation of Negative Electrode)

First, flake artificial black lead was pulverized and classified to obtain flake artificial black lead having an average particle size of about 20 µm.

Next, a negative electrode mixture slurry was obtained by mixing 1 part by weight (pbw) of styrene-butadiene rubber (a binder) and 100 pbw of a water solution containing carboxymethyl-cellulose by 1 weight percent, into 100 pbw of flake artificial black lead.

After that, this negative electrode mixture slurry was applied to both surfaces of a copper foil (a negative electrode current collector) having a thickness of 8 µm, and dried. Here, no negative electrode mixture slurry was provided to a portion of the surface of the negative electrode current collector to which portion a negative electrode lead was to be attached.

After that, the negative electrode current collector on the both surfaces of which the negative electrode active material and others were provided was rolled and thereafter subjected to a heat treatment at 190°C for five hours. The negative electrode current collector was cut to have a thickness of 0.210 mm, a width of 58.5 mm, and a length of 510 mm, thereby obtaining a negative electrode.

### (Method for Forming Nonaqueous Electrolyte)

To a solvent mixture of ethylene carbonate, ethyl methyl carbonate, and dimethyl carbonate in a volume ratio of 1:1:8, 3 wt. % of vinylene carbonate was added. LiPF₆ was dissolved in this solution in a concentration of 1.4 mol/m³, thereby obtaining a nonaqueous electrolyte.

### (Method for Fabricating Cylindrical Battery)

First, a positive electrode lead made of aluminum was welded to the portion to which no positive electrode mixture slurry was provided on the positive electrode current collector. A negative electrode lead made of nickel was welded to the portion to which no negative electrode mixture slurry was provided on the negative electrode current collector. After that, the positive electrode and the negative electrode were faced to each other such that the positive electrode lead and the negative electrode lead extend in opposite directions, and a separator (a porous insulating layer) made of polyethylene was placed between the positive electrode and the negative electrode. Then, the positive electrode and the negative electrode were wound around a winding core having a diameter of 3.5 mm, while applying a load of 1.2 kg, with the separator interposed between the positive electrode and the negative electrode, thereby obtaining an electrode group of a wound type.

Next, an upper insulating plate was placed above the upper surface of the electrode group, and a lower insulating plate was placed below the lower surface of the electrode group. After that, the negative electrode lead was welded to a battery case, and the positive electrode lead was welded to a sealing plate, thereby housing the electrode group in the battery case. After that, the nonaqueous electrolyte was injected in the battery case under a reduced pressure, and the sealing plate was fitted to the opening of the battery case via a gasket, thereby obtaining a battery 1.

### (Battery 2)

A battery 2 was fabricated according to the same method as the method for fabricating the battery 1, except a change in conditions for rolling the positive electrode current collector on the both surfaces of which the positive electrode active material and others were provided. Specifically, the rolling was performed using a roll heated to 60°C, and a pressure in the rolling process was 1.6 ton/cm.

### (Battery 3)

A battery 3 was fabricated according to the same method as the method for fabricating the battery 1, except a change in conditions for rolling the positive electrode current collector on the both surfaces of which the positive electrode active material and others were provided. Specifically, the rolling was performed using a roll heated to 120°C, and a pressure in the rolling process was 1.0 ton/cm.

### (Battery 4)

A battery 4 was fabricated according to the same method as the method for fabricating the battery 1, except a change in conditions for rolling the positive electrode current collector on the both surfaces of which the positive electrode active material and others were provided. Specifically, the rolling was performed using a roll heated to 150°C, a pressure in the rolling process was 0.8 ton/cm.

### (Battery 5)

A battery 5 was fabricated according to the same method as the method for fabricating the battery 1, except a change in iron content in the positive electrode current collector and a change in conditions for rolling the positive electrode current collector on the both surfaces of which the positive electrode active material and others were provided. Specifically, a foil made of aluminum alloy containing iron in amount of 1.5 wt. % with respect to aluminum was used as the positive electrode current collector. Further, the rolling was performed using a roll heated to 60°C, and a pressure in the rolling process was 1.6 ton/cm.

### (Battery 6)

A battery 6 was fabricated according to the same method as the method for fabricating the battery 5, except a change in conditions for rolling the positive electrode current collector on the both surfaces of which the positive electrode active material and others were provided. Specifically, the rolling was performed using a roll heated to 120°C, and a pressure in the rolling process was 1.0 ton/cm.

### (b) Method for Measuring Battery Capacity

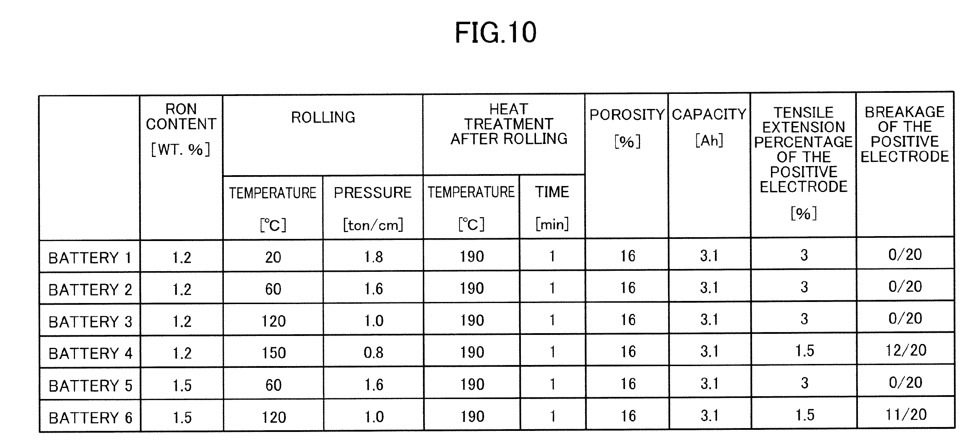

Battery capacities of the batteries 1-6 fabricated according to the above methods were measured in an atmosphere of 25°C. Specifically, the battery capacities were capacities after the batteries were charged at a constant current of 1.5 A until the voltage reached 4.2 V, thereafter charged at a constant voltage of 4.2 V until the current reached 50 mA, and subsequently discharged at a constant current 0.6 A until the voltage reached 2.5 V. The results are shown in "CAPACITY" in FIG. 10.

### (c) Existence or Nonexistence of Breakage of Positive Electrode

The electrode group was taken out from the battery case of each of the batteries 1-6 fabricated according to the above methods to check by eye if the positive electrode is broken or not. The results are shown in "BREAKAGE OF POSITIVE ELECTRODE" in FIG. 10. The denominator in the "BREAKAGE OF POSITIVE ELECTRODE" of FIG. 10 is the total number of batteries, and the numerator is the number of batteries in which breakage of the positive electrode was found.

### (d) Tensile Extension Percentage of Positive Electrode

The tensile extension percentage of the positive electrode of each of the obtained batteries 1-6 was measured according to the method for measuring the tensile extension percentage of the positive electrode described above.

### 2. Results and Considerations

The results are shown in FIG. 10.

Although the conditions for rolling are different, the porosity of the positive electrode mixture layer is same between the batteries 1-6. This means that if the temperature at rolling is high, the porosity of the positive electrode mixture layer can be 16% or so without much increasing a pressure in the rolling process. A reason for this may be that the rolling at a high temperature causes a reduction in elastic coefficient of the binder of the positive electrode.

It turned out from the results of the batteries 2-6, especially from comparison between the result of the battery 3 and the result of the battery 6, that in battery 3 the tensile extension percentage of the positive electrode was increased by the heat treatment after rolling, whereas in battery 6 the tensile extension percentage of the positive electrode was not increased much by the heat treatment after rolling. From this, it was found that an optimum temperature of the rolling depended on the iron content in the positive electrode current collector, and that the optimum temperature of the rolling can be high if the iron content in the positive electrode current collector is low.

### INDUSTRIAL APPLICABILITY

As described above, the present invention is useful for high capacity nonaqueous electrolyte secondary batteries.

### DESCRIPTION OF REFERENCE CHARACTERS

- 1: battery case
- 2: sealing plate
- 3: gasket
- 4: positive electrode
- 4A: positive electrode current collector
- 4B: positive electrode mixture layer
- 4a: positive electrode lead
- 5: negative electrode
- 5A: negative electrode current collector
- 5B: ne gative electrode mixture layer
- 5a: negative electrode lead
- 6: porous insulating layer
- 8: electrode group
- 9: crack

## Claims

1. A nonaqueous electrolyte secondary battery, comprising:
a positive electrode;
a negative electrode;
a porous insulating layer interposed between the positive electrode and the negative electrode; and
a nonaqueous electrolyte, wherein
the positive electrode includes a positive electrode current collector and a positive electrode mixture layer provided on at least one surface of the positive electrode current collector,
a tensile extension percentage of the positive electrode is 3.0% or more,
the positive electrode current collector contains iron, and
a porosity of the positive electrode mixture layer is 17% or less.

2. The nonaqueous electrolyte secondary battery of claim 1, wherein
the positive electrode current collector contains iron in an amount of 1.2 weight percent or more with respect to aluminum.

3. A method for fabricating the nonaqueous electrolyte secondary battery of claim 1, the method comprising the steps of:
(a) providing, on the surface of the positive electrode current collector, a positive electrode mixture slurry containing a positive electrode active material and a binder;
(b) after step (a) drying the positive electrode mixture slurry;
(c) after step (b) rolling at a predetermined temperature the positive electrode current collector on the surface of which the positive electrode active material and the binder are provided; and
(d) after step (c) providing a heat treatment to the rolled positive electrode current collector, wherein
the predetermined temperature is equal to or higher than a first temperature and lower than a second temperature,
the first temperature is a temperature at which an elastic coefficient of the binder starts to decrease, and
the second temperature is a temperature at which the tensile extension percentage of the positive electrode current collector reaches a minimum.

4. The method for fabricating the nonaqueous electrolyte secondary battery of claim 3, wherein
if an iron content in the positive electrode current collector is x₁, the second temperature is y₁, and
if the iron content in the positive electrode current collector is X₂ which is lower than the X₁, the second temperature is y₂ which is higher than the y₁.

5. The method for fabricating the nonaqueous electrolyte secondary battery of claim 4, wherein
if the positive electrode current collector contains iron in the amount of 1.2 weight percent with respect to aluminum, the second temperature is 130°C.

6. The method for fabricating the nonaqueous electrolyte secondary battery of claim 3, wherein
a roll heated to the predetermined temperature is used in step (c).

7. The method for fabricating the nonaqueous electrolyte secondary battery of claim 3, wherein
the first temperature is 50°C.
